# FASCICULE DE BREVET EUROPEEN

(11) **EP 2 069 624 B1**
(45) Date de publication et mention de la délivrance du brevet: **20.04.2016**
(21) Numéro de dépôt: 07848304.7
(22) Date de dépôt: 02.10.2007
(51) Int. Cl.: F02C 7/04, B64D 29/08, B64D 33/02, B60J 10/00

(54) **STRUCTURE D'ENTRÉE D'AIR DÉPOSABLE POUR NACELLE DE TURBORÉACTEUR**
ABNEHMBARE LUFTEINLASSSTRUKTUR FÜR EINE TURBOSTRAHL-MOTORENGONDEL
REMOVABLE AIR INTAKE STRUCTURE FOR TURBOJET ENGINE NACELLE

(30) Priorité: 02.10.2006 FR 0608599
(43) Date de publication de la demande: 17.06.2009
(73) Titulaire: Aircelle, 76700 Gonfreville L'Orcher (FR)
(72) Inventeur: VAUCHEL, Guy, Bernard, 76610 Le Havre (FR); EPHERRE-IRIART, Serge, 76600 Le Havre (FR)
(74) Mandataire: Jouanneau, Lionel
(86) Numéro de dépôt international: PCT/FR2007/001605
(87) Numéro de publication internationale: WO 2008/040877

(56) Documents cités:
- EP-A1- 1 715 160
- GB-A- 2 274 490
- GB-A- 2 288 578
- US-A- 5 014 933
- US-A1- 2005 001 458

## Description

La présente invention se rapporte à une nacelle pour turboréacteur comprenant une structure d'entrée d'air apte à canaliser un flux d'air vers une soufflante du turboréacteur et une structure médiane destinée à entourer ladite soufflante et à laquelle est rattachée la structure d'entrée d'air.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section médiane de la nacelle.

Selon les conditions de température et d'humidité relative au sol ou en vol, du givre peut se déposer sur le profil de la lèvre, notamment au niveau du profil intérieur. Cette formation de givre peut être dangereuse pour le fonctionnement mécanique des parties fixes et tournantes du moteur et occasionner une diminution des performances. Des systèmes de dégivrage de cette partie de la lèvre d'entrée d'air ont donc été mis au point pour remédier à ce problème. On peut notamment citer les documents US 4 688 757 et EP 1 495 963 ainsi que la demande non encore publiée enregistrée sous le numéro FR 06/02547. Une nacelle selon l'art antérieur est divulguée dans le document GB 2 274 490.

Actuellement, les opérations de maintenance sur ces équipements logés à l'intérieur de la structure d'entrée d'air obligent les constructeurs à prévoir des trappes d'accès à ces différents équipements. Malgré les efforts mis en oeuvre pour optimiser le positionnement des trappes et permettre un accès le plus facile possible, il est parfois nécessaire de visiter les équipements internes de la structure d'entrée d'air à l'aide d'outils spécifiques tel qu'un endoscope, ce qui ne donne pas entière satisfaction au niveau du contrôle de ces équipements.

Par ailleurs, en cas de besoin de remplacer une partie des équipements internes, il sera nécessaire de déposer la totalité de la structure d'entrée d'air, ce qui requiert un outillage important et entraîne une immobilisation de l'ensemble propulsif et donc généralement de l'avion.

On notera également que les conditions d'exploitation et de maintenance d'une entrée d'air obligent à avoir des composants distincts, comme une lèvre modulaire sectorisée ainsi qu'un panneau externe facilement démontable en raison de leur fort taux de remplacement du à leur exposition directe au milieu extérieur et à d'éventuels projectiles. Ces contraintes réduisent de manière importante l'intégrité de la ligne aérodynamique générale de la structure d'entrée d'air, ce que la présence de trappes d'accès vient encore aggraver.

La présente invention a pour but de pallier les inconvénients précédemment évoqués et consiste pour cela en une nacelle pour turboréacteur selon la revendication 1 et comprenant une structure d'entrée d'air apte à canaliser un flux d'air vers une soufflante du turboréacteur et une structure médiane destinée à entourer ladite soufflante et à laquelle est rattachée la structure d'entrée d'air de manière à assurer une continuité aérodynamique, la structure médiane comprenant, d'une part, un carter destiné à entourer la soufflante et, d'autre part, une structure externe, caractérisée en ce que la structure d'entrée d'air comprend, d'une part, au moins un panneau interne fixé à la structure médiane et formant avec cette dernière une structure fixe de la nacelle, et d'autre part, au moins un panneau externe longitudinal rattaché de manière amovible à la structure fixe et intégrant une lèvre d'entrée d'air, ledit panneau externe étant amovible entre une position de fonctionnement dans laquelle le panneau externe assure la continuité aérodynamique avec la structure externe de la section médiane et la lèvre d'entrée d'air assure la continuité aérodynamique avec le panneau interne de la structure d'entrée d'air, et une position de maintenance dans laquelle le panneau externe est écarté de la structure externe de la section médiane et la lèvre d'entrée d'air est écartée du panneau interne de la structure d'entrée d'air.

Ainsi, en intégrant la lèvre d'entrée d'air au panneau externe de manière à former une pièce unique démontable, un démontage et un remplacement partiel de la structure d'entrée d'air sont possibles et facilités. Par ailleurs, le démontage ainsi facilité permet également d'ouvrir la structure d'entrée d'air pour accéder à des équipements internes sans demander de manoeuvres importantes et compliquées ni requérir un temps d'immobilisation élevé. On notera, en outre, qu'il n'existe alors plus d'interface de liaison entre le panneau externe et la lèvre d'entrée d'air, seule une éventuelle interface longitudinale pouvant exister en cas de pluralité de panneaux. Cette absence d'interface perpendiculairement à un écoulement de l'air permet d'améliorer la ligne aérodynamique externe de la nacelle.

Il convient également de noter que la présente invention limite la taille du panneau externe translatable sensiblement au niveau de la jonction entre la paroi interne de l'entrée d'air et le carter de soufflante. Ainsi, le carter de soufflante peut toujours être équipé de ses propres moyens d'accès.

Ainsi, en cas de maintenance nécessaire uniquement au niveau du carter de soufflante ou de sa jonction avec la paroi interne de l'entrée d'air, il n'est pas nécessaire de déposer inutilement la paroi externe de l'entrée d'air. Il s'ensuit un gain de temps de maintenance global. Chaque section gardant une possibilité d'accès indépendante.

Avantageusement, la structure médiane présente avec le panneau externe une interface située en aval de la structure d'entrée d'air. Plus précisément, la nacelle présente un panneau externe s'étendant légèrement au-delà de la jonction entre le carter de soufflante et le panneau interne.

De cette manière, l'incidence de la rupture aérodynamique que forme ladite interface sur les performances aérodynamique est minimisée.

La section médiane comprend au moins un capot mobile apte à permettre un accès extérieur à la nacelle.

Avantageusement, la lèvre et le panneau externe de la structure d'entrée d'air présentent une interface au niveau de laquelle ladite lèvre et panneau externe se chevauchent partiellement lorsqu'en position de fermeture. Avantageusement encore, l'interface présente un point amont formant butée. Un tel chevauchement permettra avantageusement d'équiper la partie de la paroi interne chevauchant la lèvre, de moyens de dégivrage de la zone inférieure de ladite lèvre.

De manière avantageuse, le panneau externe de la structure d'entrée d'air présente un cadre arrière apte à être rattaché à une cloison complémentaire de la structure d'entrée d'air solidaire d'une partie fixe de la nacelle par l'intermédiaire du panneau interne.

Avantageusement, la structure d'entrée d'air comprend des moyens de centrage et de positionnement du panneau externe.

De manière préférentielle, la structure d'entrée d'air comprend des moyens de guidage aptes à permettre un déplacement sensiblement rectiligne du panneau externe vers l'amont de la nacelle de manière à pourvoir ouvrir le panneau externe. Ainsi, une ouverture partielle de la structure d'entrée d'air et une remise en place de ladite structure sont facilitées.

Avantageusement, la structure d'entrée d'air comprend au moins un moyen de butée du panneau externe apte à permettre une ouverture partielle de ce dernier sans nécessiter une dépose complète.

Préférentiellement, les moyens de guidage comprennent au moins un système de rail.

Avantageusement, les moyens de guidage comprennent au moins un rail apte à coopérer avec un coulisseau ou une glissière correspondant.

En variante ou de manière complémentaire, les moyens de guidage comprennent au moins un système de patins à rouleau aptes à coopérer avec un rail correspondant. Avantageusement, les rouleaux sont montés sur des axes souples, du type « paulstra ». Avantageusement encore, les rouleaux sont montés sur au moins une platine, ladite platine étant elle-même fixée de manière souple, par une liaison rotulante ou une interface de type « paulstra », par exemple.

En variante ou de manière complémentaire également, les moyens de guidage comprennent au moins un rail en rigole apte à coopérer avec un système de glissière correspondant.

Avantageusement, les moyens de guidage comprennent au moins un axe longitudinal apte à coulisser à travers une ouverture correspondante. De tels axes remplissent également une fonction de centrage.

Préférentiellement, la structure d'entrée d'air comprend des moyens d'entraînement mécanique ou manuel du panneau externe le long des moyens de guidage.

Préférentiellement encore, le panneau interne de la structure d'entrée d'air comprend une virole acoustique.

De manière avantageuse, la structure d'entrée d'air comprend des équipements de dégivrage électrique de la structure d'entrée d'air.

De manière avantageuse, le panneau interne ou le panneau externe est, au niveau de la jonction entre la lèvre d'entrée d'air, prolongé par une languette élastique périphérique apte à venir recouvrir ladite jonction lorsque le panneau externe est en position de fermeture.

On notera également que le pylône par lequel la nacelle est rattachée à l'avion s'étend sur la section aval et médiane de la nacelle et ne dépasse généralement pas sur la section d'entrée d'air. De ce fait, les moyens de guidage du capot mobile ne peuvent utiliser le pylône comme un point de fixation des rails, et il est nécessaire d'intégrer dans l'entrée d'air, un système de guidage distinct.

La mise en oeuvre de l'invention sera mieux comprise à l'aide de la description détaillée qui est exposée ci-dessous en regard du dessin annexé dans lequel :
La figure 1 est une représentation schématique d'une nacelle selon l'invention présentant une structure d'entrée d'air comprenant une lèvre intégrée aux panneaux externes.
La figure 2 est une représentation schématique en coupe longitudinale d'un premier mode de réalisation de la structure d'entrée d'air de la figure 1.
Les figures 3 à 5 sont des représentations schématiques agrandies de la zone de jonction entre un panneau externe intégrant une lèvre d'entrée d'air et un panneau interne de la structure d'entrée d'air de la figure 2.
La figure 6 est une représentation schématique en coupe longitudinale de la structure d'entrée d'air de la figure 2 en position d'ouverture.
Les figures 7 à 9 sont des représentations schématiques partielles d'une structure d'entrée d'air selon l'invention présentant une interface de raccordement pour une installation de dégivrage électrique équipant le panneau externe.
Les figures 10 et 11 sont des représentations schématiques partielles d'une première variante de réalisation de moyens de guidage équipant la structure d'entrée d'air selon l'invention respectivement en position de fermeture et d'ouverture.
Les figures 12 et 13 sont des représentations schématiques partielles d'une deuxième variante de réalisation de moyens de guidage équipant la structure d'entrée d'air selon l'invention respectivement en position de fermeture et d'ouverture, lesdits moyens de guidage comprenant des moyens d'entraînement.
La figure 14 est une vue de face en coupe du système de guidage représenté sur les figures 12 et 13.
La figure 15 est une vue de face en coupe d'une variante de réalisation du système de guidage permettant de réduire les effets de coincements.
Les figures 16 à 18 sont des représentations schématiques partielles agrandies de divers éléments du système de guidage.
La figure 19 est une vue de face en coupe d'une deuxième variante de réalisation du système de guidage permettant de réduire les effets de coincements.

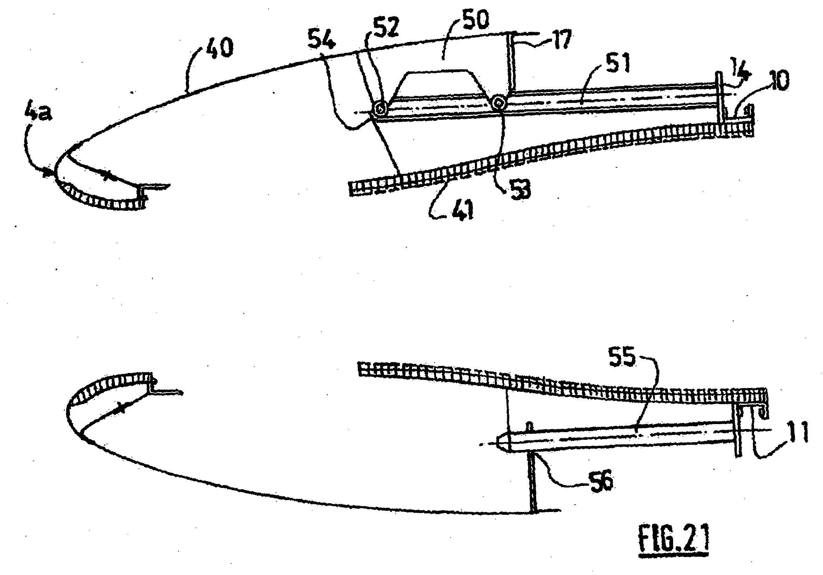

Les figures 20 et 21 sont des représentations schématiques en coupe longitudinale du système de guidage de la figure 19.
Les figures 22 et 23 sont des représentations schématiques en coupe longitudinale d'une entrée d'air selon l'invention comprenant des moyens de dégivrage pneumatiques.
Les figures 24 et 25 sont des représentations schématiques d'un système d'entraînement mécanique adapté à l'invention.
Les figures 26 à 29 sont des représentations d'amélioration pouvant être apportées à un système de guidage par rail / rouleaux.
Les figures 30 et 31 sont des représentations d'une amélioration visant à améliorer la continuité aérodynamique de l'ensemble.

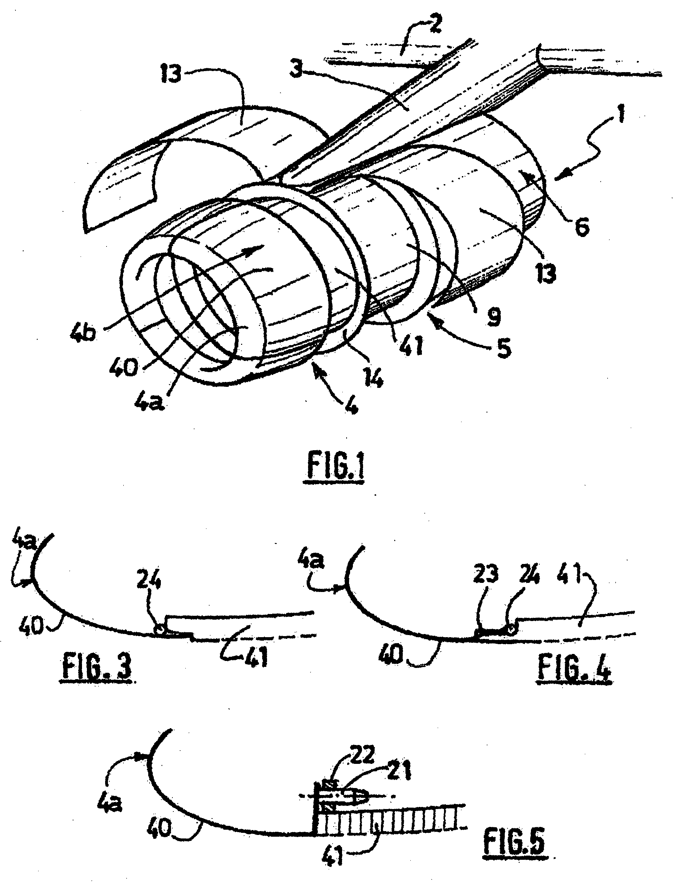

Une nacelle 1 selon l'invention telle que représentée sur la figure 1 constitue un logement tubulaire pour un turboréacteur (non visible) dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur ainsi que des systèmes annexes tels qu'un inverseur de poussée.

La nacelle 1 est destinée à être rattachée à une structure fixe d'un avion, telle qu'une aile 2, par l'intermédiaire d'un pylône 3.

Plus précisément, la nacelle 1 possède une structure comprenant une section avant formant une entrée d'air 4, une section médiane 5 entourant une soufflante (non visible) du turboréacteur, et une section arrière 6 entourant le turboréacteur et abritant généralement un système d'inversion de poussée (non représenté).

L'entrée d'air 4 se divise en deux zones, à savoir d'une part, une lèvre 4a d'entrée adaptée pour permettre la captation optimale vers le turboréacteur de l'air nécessaire à l'alimentation de la soufflante et des compresseurs internes du turboréacteur, et d'autre part, une structure aval 4b comprenant un panneau externe 40 et un panneau interne 41 et sur laquelle est rapportée la lèvre 4a et destinée à canaliser convenablement l'air vers les aubes 8 de la soufflante 6.

Selon l'invention, la lèvre 4a est intégrée au panneau externe 40 de manière à former une pièce unique démontable, le panneau interne 41 étant rattaché en amont d'un carter 9 de la soufflante appartenant à la section médiane 5 de la nacelle 1 par l'intermédiaire de brides de fixation 10, 11, solidaires respectivement de la structure aval 4b et du carter 9 et formant une jonction 12.

La structure d'entrée d'air 4 peut être modulaire et comprendre une pluralité de panneaux externes 40 définissant chacun une portion de lèvre d'entrée d'air 4a correspondante. Dans ce cas, la structure d'entrée d'air 4 présentera des lignes de jonction. Toutefois, ces lignes s'étendent longitudinalement par rapport à la nacelle 1, et elles n'auront qu'une incidence négligeable sur la continuité aérodynamique de la structure d'entrée d'air 4 contrairement à une nacelle selon l'art antérieur présentant une ligne de jonction périphérique entre le panneau externe 40 et la lèvre 4a, ladite ligne de jonction étant située transversalement par rapport au sens d'écoulement de l'air.

La figure 1 montre la structure d'entrée d'air 4 avec le panneau externe 40 en position d'ouverture partielle. Avantageusement l'ouverture dudit panneau externe ne peut s'effectuer qu'après ouverture de capots 13 fan latéraux équipant la section médiane.

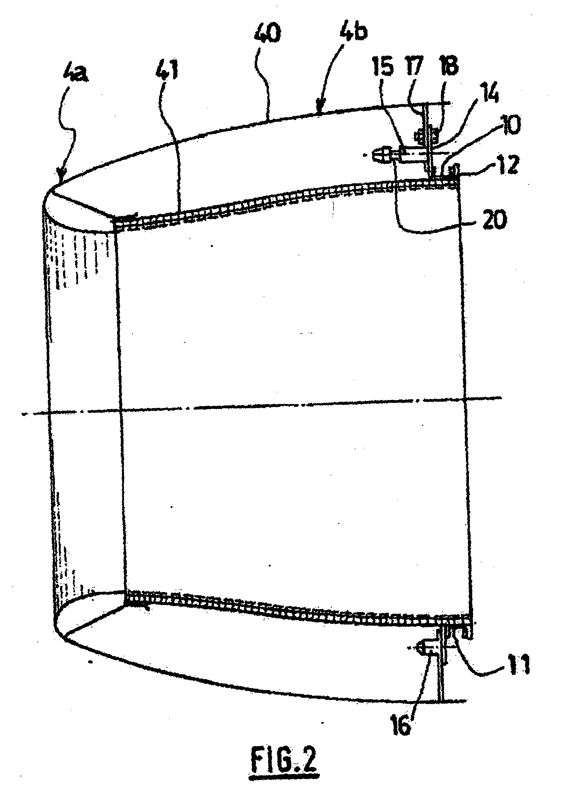

La figure 2 montre un premier mode de réalisation d'une structure d'entrée d'air 4 selon l'invention.

Tout d'abord, le panneau interne 41 est réalisé à partir d'une virole acoustique et est relié par l'intermédiaire des brides 10, 11 au carter 9 de la section médiane 5. Ce panneau interne 41 constitue donc une partie fixe de la structure d'entrée d'air 4 sur laquelle est destinée à être rapportée et fixée, de manière démontable, le panneau externe 40 intégrant la lèvre d'entrée d'air 4a.

Pour ce faire, chaque bride 10, 11 supporte également une cloison 14 périphérique radiale, cette cloison portant des centreurs 15 et centreurs secondaires 16 s'étendant perpendiculairement à ladite cloison 14 vers l'amont de la nacelle 1. De préférence, on prévoira trois centreurs 15 et trois centreurs secondaires 16 uniformément répartis en alternance autour de la structure d'entrée d'air 4.

On notera également que la structure d'entrée d'air 4, peut s'étendre axialement par l'intermédiaire de son panneau externe 41 au-delà d'une bride d'attache du panneau interne 41 à la structure fixe de la nacelle 1 pour avoisiner une structure externe d'une structure d'inversion de poussée appartenant à la section aval 6 de la nacelle 1 et éventuellement recouvrir les capots 13. Un système de verrous peut alors être prévu pour maintenir la structure d'entrée d'air sur la cloison 14 solidaire de la structure du carter 9 ou d'une structure amont de la structure aval 6.

On notera encore que la cloison 14 périphérique radiale peut être portée directement par la structure même du carter 9 de soufflante afin de fournir un maximum d'enveloppe interne à l'entrée d'air 4.

Le panneau externe 40 intégrant la lèvre d'entrée d'air 4a forme donc conformément à l'invention une partie amovible destinée à être rapportée sur la partie fixe et plus particulièrement sur la cloison périphérique 14.

Pour ce faire, le panneau externe 40 est équipé d'un cadre avant 17 périphérique apte à être fixé contre la cloison 14 à l'aide d'éléments de fixation 18 tels qu'un système boulons/écrous. Le cadre avant 17 présente de plus des ouvertures 19 aptes à permettre le passage des centreurs 15 et centreurs secondaires 16 lorsque le panneau externe 40 est correctement positionné et en position de fermeture.

Des renforts internes des panneaux internes et externes existants ne sont pas représentés et dépendent de la raideur recherchée par l'homme du métier.

Les centreurs 15 sont terminés par une gorge 20 faisant office d'élément de retenue et de support du panneau externe 40 lors d'une phase de démontage en permettant au cadre avant 17 de s'y accrocher et de ne pas basculer. Ces centreurs 15 et centreurs secondaires 16 remplissent également une fonction de guidage et leur longueur dépend du guidage souhaité.

L'étanchéité de la fixation entre le cadre avant 17 du panneau externe 40 et la cloison 14 pourra être assuré à l'aide d'un joint périphérique.

En position ainsi assemblée, la lèvre 4a intégrée au panneau externe 40 assure la continuité aérodynamique avec la virole acoustique 41. Différents systèmes d'alignement sont représentés à titre d'exemple sur les figures 3 à 5.

L'interface entre la lèvre d'entrée d'air 4a intégrée au panneau externe 40 et la virole acoustique 41 du panneau interne peut être elle-même externe (figures 3 et 4) ou interne (figure 5) mais doit assurer une continuité aérodynamique la plus pure possible. Des moyens de centrage rigides, tels que des pions de centrage 21 (figure 5) aptes à coopérer avec des alésages 22 correspondants, ou souples, tel qu'une languette élastique 23 (figure 4), assurent cette continuité structurelle.

Un joint d'étanchéité 24 est disposé à l'interface sur l'un ou l'autre panneau interne 41 ou externe 40 indifféremment.

Avantageusement, tel que représentés sur les figures 3 et 4, la lèvre et le panneau externe de la structure d'entrée d'air présentent une interface au niveau de laquelle ladite lèvre et panneau externe se chevauchent partiellement lorsqu'en position de fermeture. Avantageusement encore, l'interface présente un point amont formant butée.

Dans un tel cas, on pourra également prévoir qu'un moyen de dégivrage d'une zone inférieure de la lèvre 4a est intégré à la partie de la paroi interne 41 chevauchant la lèvre 4a.

Ces systèmes doivent permettre d'assurer un jeu minimum entre la virole acoustique 41 et la lèvre d'entrée d'air 4a de manière à ce que cette jonction crée une perturbation aérodynamique la plus minime possible. Pour permettre un réglage précis de ce jeu et le réduire au minimum, on pourra prévoir une interface de fixation réglable entre le cadre avant 17 et la cloison 14.

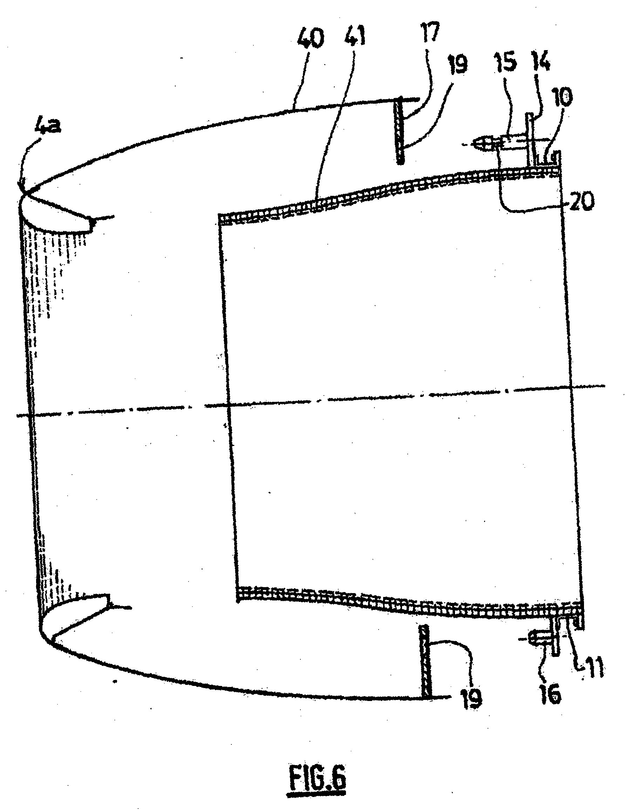

La figure 6 montre la structure d'entrée d'air de la figure 2 en position ouverte.

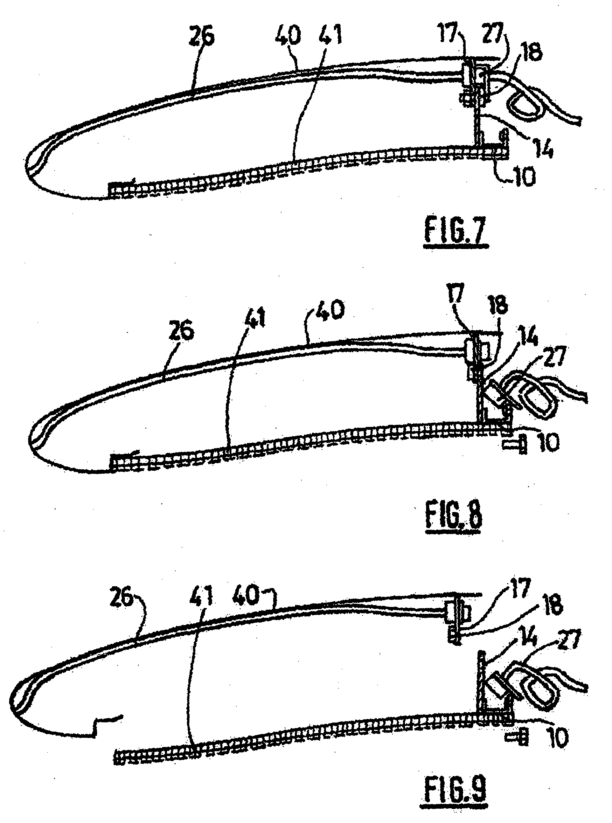

Par ailleurs, les panneaux externes 40 et internes 41 peuvent comporter des éléments électriques 26 de dégivrage et il sera avantageux de prévoir une interface de raccordement d'une alimentation électrique 27 sur le cadre avant 17 ou la cloison 14. Un tel système est représenté sur les figures 7 à 9 en différentes étapes lors du démontage du panneau supérieur 40.

Dans les cas de grandes dimensions d'entrée d'air, par exemple, il est possible de n'effectuer qu'une ouverture partielle du panneau externe 40 intégrant la lèvre d'entrée d'air 4a. Il est alors utile de prévoir des moyens de guidage et éventuellement d'actionnement.

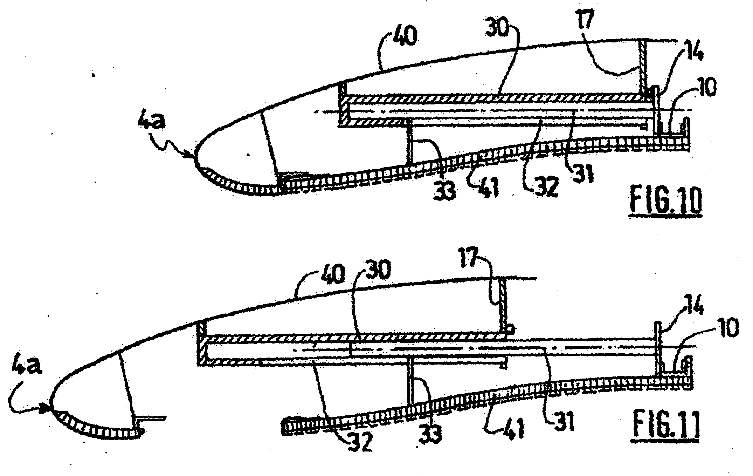

Un premier exemple d'un mode de réalisation d'une structure d'entrée d'air selon l'invention comprenant des moyens de guidage est représenté sur les figures 10 et 11 présentant un panneau externe en position de fermeture et d'ouverture respectivement.

Les moyens de guidage comprennent un rail 30 solidaire du panneau externe 40 disposé en interface avec le cadre avant 17, et apte à coopérer avec un axe 31 longitudinal porté par la cloison 14 et la bride 10 de la partie fixe de la structure d'entrée d'air 4.

A titre de renforcement structurel de l'axe 31, une lunule 32 est pratiquée dans le rail pour permettre le passage d'un renfort 33 de l'axe 31 sur le panneau interne 41.

On notera la possibilité d'utiliser un système de rails / glissière télescopique permettant un dégagement plus important de la paroi externe 40.

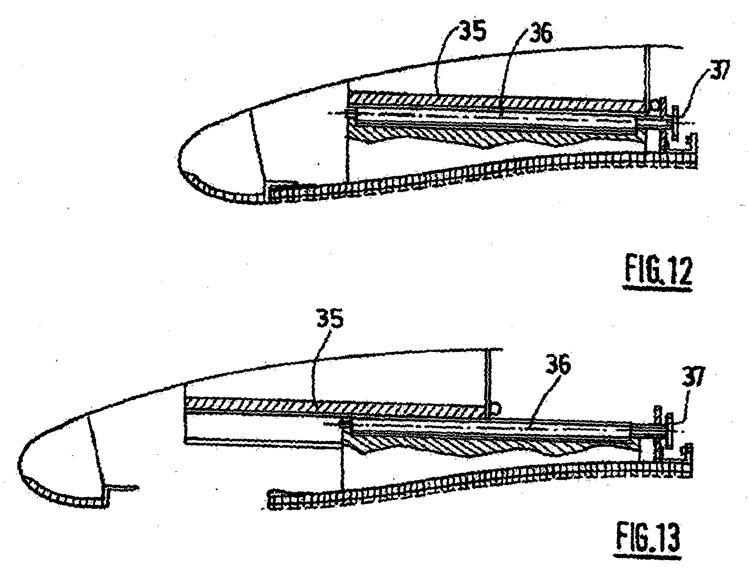

Un deuxième exemple d'un mode de réalisation d'une structure d'entrée d'air selon l'invention comprenant des moyens de guidage est représenté sur les figures 12 et 13 présentant un panneau externe 40 en position de fermeture et d'ouverture respectivement.

Dans ce mode de réalisation, les moyens de guidage incluent des moyens d'actionnement.

Comme précédemment, les moyens de guidage comprennent un rail 35 solidaire du panneau externe 40 disposé en interface avec le cadre avant 17, et apte à coopérer avec un axe 36 longitudinal porté par la cloison 14 et la bride 11 de la partie fixe de la structure d'entrée d'air 4. Toutefois, ce rail 35 présente la particularité d'être dentelé de manière à pouvoir coopérer avec une vis d'entraînement faisant office d'axe 36. La vis d'entraînement 36 est couplée à un moteur électrique ou tout autre moyen d'entraînement 37 en rotation et son actionnement permet l'ouverture et la fermeture du panneau externe 40.

Bien évidemment, ces deux modes de réalisation peuvent être combinés pour obtenir un panneau externe 40 apte à coulisser soit manuellement soit mécaniquement selon le souhait de l'opérateur.

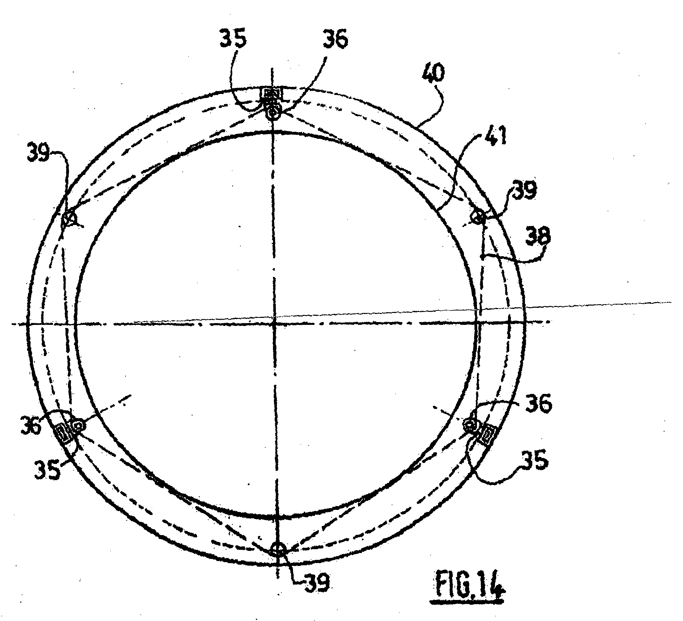

La figure 14 est une vue en coupe de face du mode de réalisation précédent. Le mode de guidage illustré pour le mode de réalisation comprenant des moyens d'entraînement incorporé est tout à fait transposable au mode de réalisation comprenant de simples moyens de guidage pour entraînement manuel.

On distingue trois système de guidage rail 35 / axe 36 disposés de manière uniforme sur la périphérie de la structure d'entrée d'air 4. Les systèmes d'entraînement 37 en rotation de chaque axe 36 sont synchronisés au moyen d'un câble 38 d'entraînement flexible communément connu sous le nom de « flexshaft » apte à délivrer la puissance d'un moteur électrique (non visible) à tous les systèmes d'entraînement 37. Le câble 38 d'entraînement flexible est guidé autour de la structure d'entrée d'air et réorienté en direction de chaque système d'entraînement au moyen de gaines 39 de passage. Bien évidemment, il est possible de ne pas utiliser un moteur électrique mais de prévoir un actionnement manuel par manivelle, par exemple, ou encore d'utiliser des moyens de transmission plus courants du type courroie ou similaire.

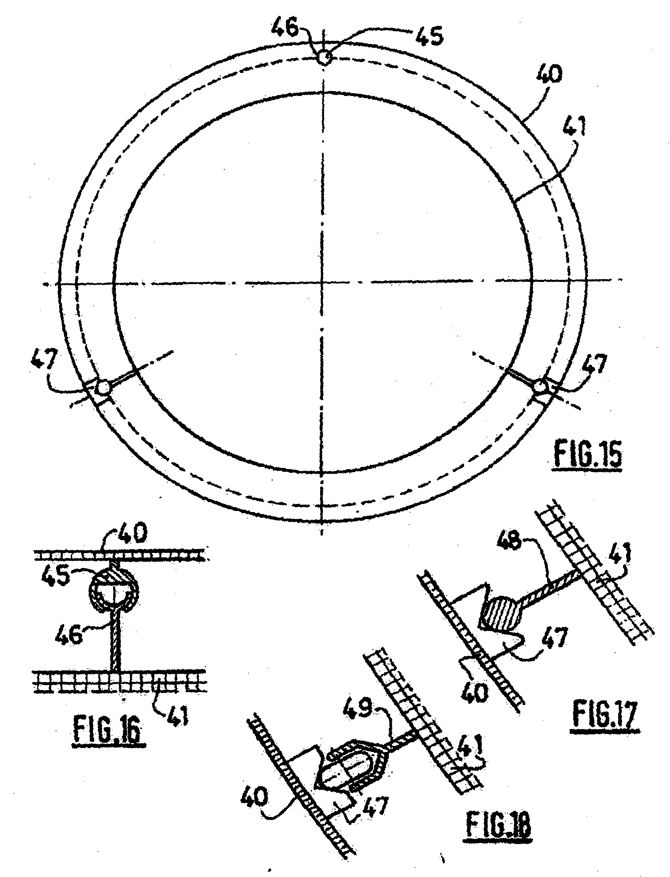

La figure 15 montre un exemple de réalisation des moyens de guidage pour réduire au minimum d'éventuels effets de coincement que l'on peut rencontrer dans le cas d'un entraînement mécanique tel que décrit précédemment.

Ce système de guidage comprend un assemblage rail 45 / coulisseau 46 disposé en partie supérieure de la structure d'entrée d'air 4 et dont une représentation détaillée est montrée sur la figure 16.

Le système de guidage comprend deux autres points de guidage disposés à équidistance les uns des autres autour de la structure d'entrée d'air 4 et comprenant un rail 47 en rigole dans lequel est apte à coulisser un axe 48 correspondant. La configuration en rigole des ces rails 47 permet d'obtenir une tolérance sur un éventuel mésalignement de la structure d'entrée d'air 4 lors de son ouverture et/ou fermeture. L'axe 48 peut être un simple coulisseau comme représenté en détail sur la figure 17 ou un axe à rouleaux 49 comme représenté sur la figure 18, par exemple.

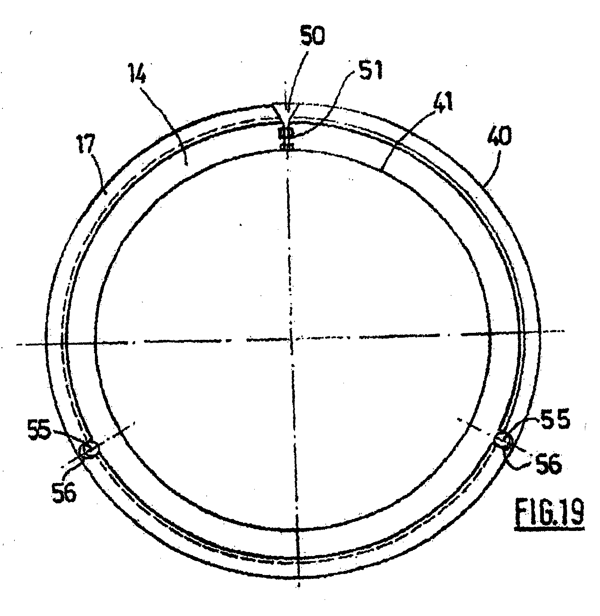

La figure 19 montre un deuxième exemple de réalisation des moyens de guidage pour réduire encore les effets de coincement.

Ce système de guidage comprend un premier point de guidage comportant un coulisseau 50 disposé comme précédemment en partie supérieure de la structure d'entrée d'air et dont une représentation détaillée est montrée sur la figure 19 et comportant un patin à rouleaux équipé d'au moins deux rouleaux 52 apte à coulisser à l'intérieur d'un rail 51 correspondant. Une butée finale 54 est intégrée au rail 51 en fin de course d'ouverture.

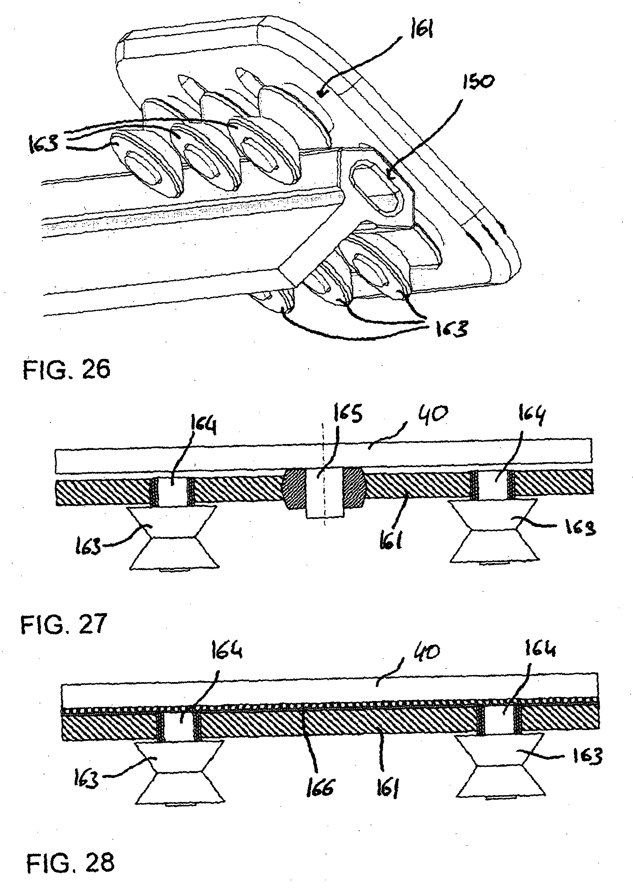

Il est également possible de prévoir la disposition inverse, c'est-à-dire un rail de guidage translatant à l'intérieur de platines à rouleaux disposées de part et d'autres du rail. Ce système sera décrit plus loin avec les figures 26 à 29.

Le système de guidage comprend deux autres points de guidage disposés à équidistance les uns des autres autour de la structure d'entrée d'air et comprenant un axe 55 solidaire de la cloison 14 de la partie fixe de la structure d'entrée d'air 4 et apte à coulisser dans une ouverture 56 oblongue ménagée dans le cadre avant 17 du panneau externe 40.

Il est également possible de rajouter au moins une poignée liée au cadre avant 17 et à une surface interne du panneau externe 40 à une hauteur médiane de la structure d'entrée d'air 4 de chaque côté de la nacelle 1. Les poignées sont positionnées selon un angle assujetti à la hauteur de la nacelle 1 sur l'avion et à son accessibilité pour un opérateur sur piste. Chaque poignée peut être intégrée à une cornière de renforcement entre le cadre avant 17 et le panneau externe 40.

En complément, le panneau externe 40 de la structure d'entrée d'air 1 peut être reliée à une masse électrique dont l'invention est développée dans le document EP 0 983 939 au nom de la demanderesse.

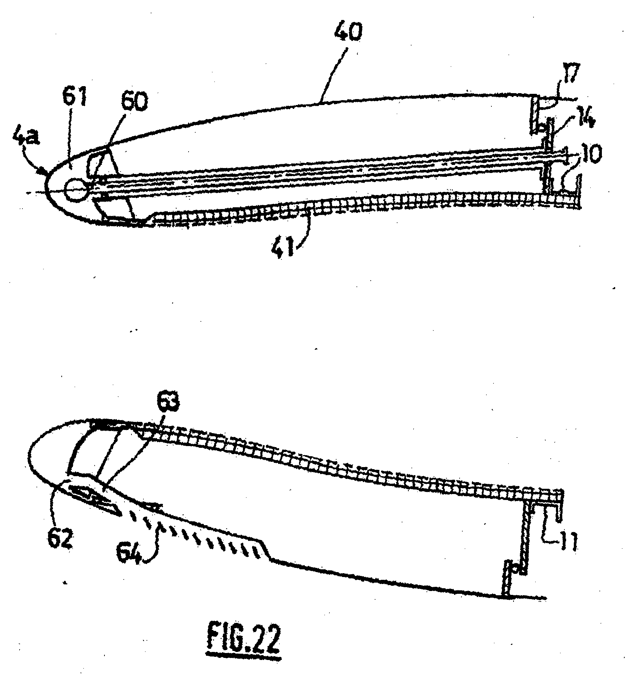

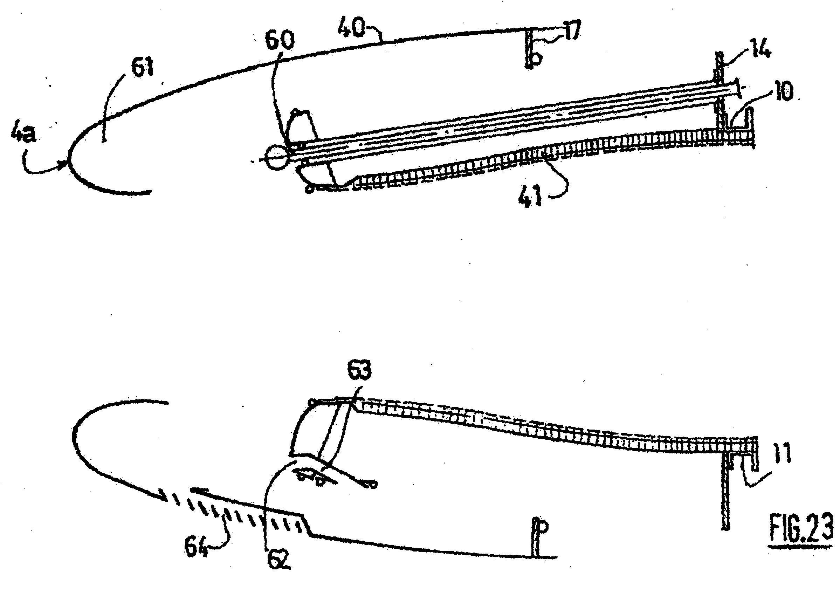

Les figures 22 et 23 montrent l'application de l'invention à une structure d'entrée d'air 4 comprenant un système de dégivrage pneumatique. Dans ce cas, la structure d'entrée d'air 4 comprend une tubulure 60 d'amenée d'air chaud depuis le turboréacteur qui traverse le cadre avant 17 et/ou la cloison 14 de la partie fixe de la structure d'entrée d'air 4. La tubulure débouche dans un compartiment 61 interne étanche et périphérique situé au niveau de la lèvre d'entrée d'air 4a.

Ce compartiment 61 présente une ouverture 62 en partie inférieure de laquelle part un canal d'évacuation 63 débouchant au niveau du panneau externe 41 au niveau d'une grille 64. Bien évidemment, cette fonction d'évacuation de l'air peut également déboucher au niveau du panneau interne 40 en variante.

Comme mentionné précédemment, il est possible de prévoir un système d'entraînement mécanique du capot mobile assisté de moyens d'actionnement électriques ou manuels. Un premier mode de réalisation a été décrit et représenté sur les figures 12 et 13. Bien évidemment d'autres modes de réalisation sont possibles de manière alternative ou complémentaire par friction (sur un élément sous par exemple, du type élastomère sur élastomère) ou mécanique.

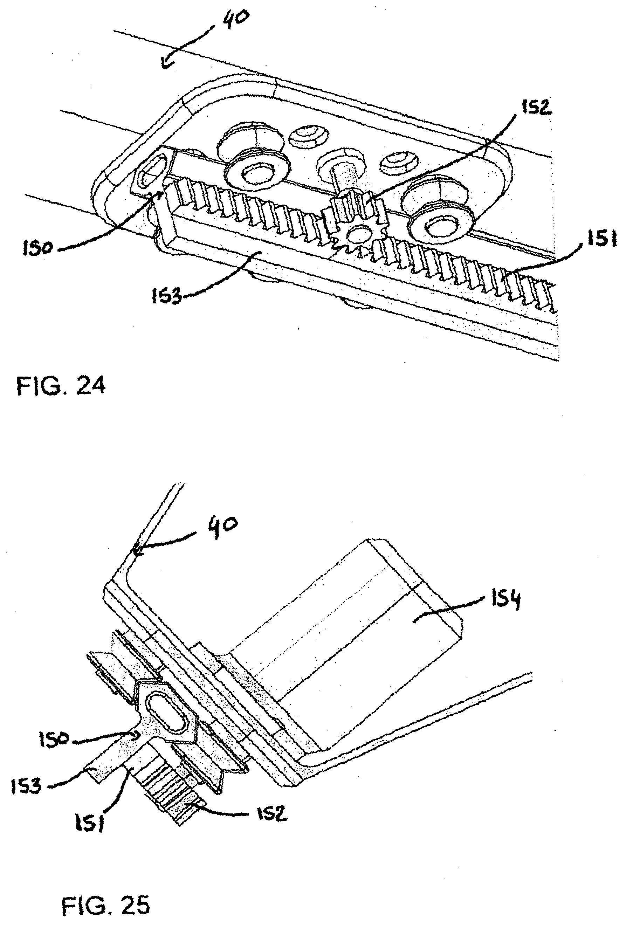

Un deuxième exemple de réalisation d'un tel système d'entraînement est représenté à des fins d'illustration sur les figures 24 et 25.

En l'espèce, on pourra notamment envisager l'installation d'un ou plusieurs rails 150 comprenant une surface longitudinale 151 crénelée formant crémaillère et apte à coopérer avec un moyen d'entraînement du type roue dentée 152 ou vis sans fin.

Comme représenté, la surface crénelée 151 sera préférentiellement prévue sur une extension 153 latérale du rail 150, mais elle pourrait éventuellement être prévue sur une surface appartenant au rail lui-même.

Le moyen d'entraînement de type vis sans fin ou roue dentée 152 pourra être lié à l'axe d'un moteur électrique 154 et/ou des moyens d'actionnement manuels de type manivelle ou poignée (non représentés), de préférence amovibles, les moyens d'entraînement électriques et manuels étant préférentiellement débrayables entre eux.

Les moyens d'entraînement type roue dentée 152 ou vis sans fin peuvent être indifféremment montés sur la structure fixe 41, 9 ou sur la structure mobile 40 selon que le rail 150 est lui-même monté sur la structure mobile 40 ou la structure fixe 41, 9. Le positionnement des moyens d'entraînement est fonction de la longueur de déplacement nécessaire ou souhaitée et de la longueur de la crémaillère 151 qui peut n'être prévue que sur une partie de la longueur du rail 150.

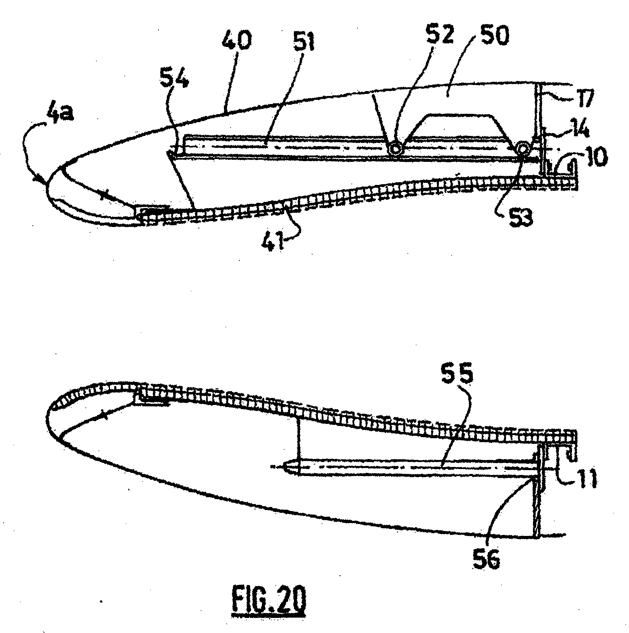

En s'attachant maintenant au guidage de la partie mobile 40 lors d'un mouvement de translation. Un mode particulier de réalisation consiste à utiliser des rails à galets ou rouleaux comme évoqués précédemment pour les figures 18 à 20. Dans un tel mode de guidage, l'alignement de la partie mobile 40 avec la partie fixe 41 devient critique et un mauvais alignement du rail de guidage peut conduire à des coincements. Ces coincements sont particulièrement présents dans le cas, par exemple, d'un rail translatant entre deux platines de rouleaux disposés de part et d'autres du rail et les manoeuvres du capot mobile 40 oblige d'avoir un parfait alignement entre les deux éléments de manière à éviter ces effets de coincement. Ceci impose par conséquence d'avoir des tolérances d'écarts à la fabrication les plus faibles possibles, notamment au niveau du positionnement des platines et du rail, ainsi que dans la forme du rail lui-même qui doit présenter une surface particulièrement lisse, tout défaut de surface, aspérités et autres risquant de conduire à ces coincements.

Une amélioration intéressante consiste donc à monter les rouleaux sur des axes souples et qui présenteront donc une possibilité d'adaptation aux défauts du rail, puisque susceptibles de s'accommoder de ces défauts par écartement élastique de leur axe.

Outre l'alignement en manoeuvre, ceci permet une simplification dans la fabrication des rails, puisque la tolérance des rouleaux aux défauts de surface a été largement augmentée.

Un exemple de réalisation est représenté sur la figure 26. Dans cette exemple, un rail 150 est monté fixement sur la structure fixe 41, 9 et guide deux ensemble de trois rouleaux 163 disposées de part et d'autre du rail 150 et montés sur une platines 161.

Bien évidemment, la présente amélioration n'est pas limitée à la platine représentée sur la figure 26 et on peut envisager des platines à deux rouleaux 163 ou encore trois rouleaux 163.

Plus précisément, afin de réduire toute hyperstaticité entre les rouleaux 163 et le rail 150, on pourra envisager préférentiellement un guidage du rail 150 par deux platines, une platine avant et une platine arrière, la platine avant comprenant deux rouleaux tandis que la platine arrière en présentera trois.

Chaque rouleau 163 est monté sur un axe 164 souple de type « Paulstra ».

Par ailleurs, chaque platine 161 est également montée sur la structure mobile 40 (éventuellement sur la structure fixe 41, 9) par le biais d'une interface souple.

Comme représenté sur la figure 27, la platine 161 est montée sur la structure mobile 40 par le biais d'une interface rotulée 165.

De manière alternative ou complémentaire, et comme représenté sur la figure 28, la platine 161 est montée sur la structure mobile 40 par le biais d'une interface souple élastique 166 de type « Paulstra » similaire à celle utilisée pour les axes 164 des rouleaux 163.

On notera également que les figures montrent l'utilisation d'un rail 150 polygonal. Bien évidemment, d'autres formes de rail 150 sont possibles, notamment cylindrique. Une telle forme permet de s'affranchir encore de certaines contraintes d'alignement en autorisant une certaine rotation de la platine 161 autour du rail 150.

Les platines 161, 162 et les rouleaux 163 peuvent éventuellement être associés à des moyens d'auto centrage.

De manière alternative ou complémentaire, les rouleaux 163 peuvent également être montés de manière à permettre une tolérance dans leur sens axial.

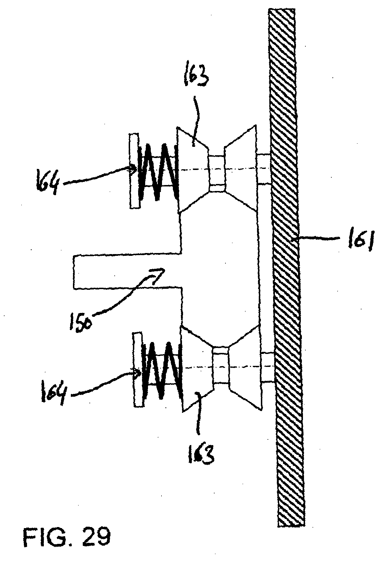

Pour ce faire, et comme représenté figure 29, les axes 164 des rouleaux 163 sont prolongés et équipés de moyens de retour élastiques, du type ressorts 170 à l'encontre desquels sont montés les rouleaux 163.

Un autre complément se rapporte à la continuité aérodynamique des surfaces de la nacelle. Comme mentionné précédemment lors de la description des figures 3 et 4, un aspect important de la conception d'une nacelle est la réduction des perturbations aérodynamiques générées par des défauts de jonction (écarts et sauts, décalage de niveau) entre les différents panneaux constitutifs de la nacelle.

En l'espèce, un point important est la jonction entre l'extrémité du panneau externe 40 terminant la lèvre d'entrée d'air 4a, et le panneau interne 41.

Plusieurs modes de jonction ont déjà été décrits pour les figures 3 à 5.

Toutefois, ces solutions ne résolvent que partiellement le problème puisque en vol, les efforts et vibrations sont également repris en partie par les pions de centrage 21 ou autres moyens de fixation et répartis sur la périphérie de la jonction. Pour assurer la tenue au cisaillement à l'interface des pions de centrage 21, il est nécessaire que cette interface soit en contact.

Les deux panneaux peuvent également éventuellement être animés de mouvements relatifs qui viennent perturber l'écoulement aérodynamique.

Pour garantir une très grande efficacité aérodynamique il est nécessaire de fournir une continuité de ligne la plus pure possible. (jeu et marche (alignement)). L'homme de l'art sait qu'il ne peut produire deux interfaces proches en contact l'une et l'autre pour des raisons de fabrication. Comme le contact au niveau des pions est à privilégier pour des raisons de dimensionnement structural, il en résulte qu'il est nécessaire de reporter le jeu entre les deux interfaces au contact de l'air préjudiciable aux performances de captation d'air et donc aux performances du moteur.

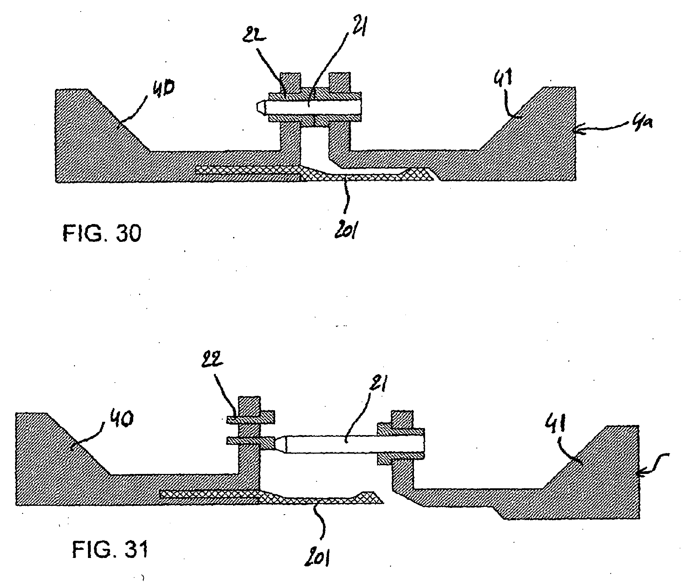

Afin d'améliorer encore la continuité aérodynamique et de répondre à ce problème, le panneau externe est, au niveau de l'extrémité de la lèvre d'entrée d'air 4a, terminé et prolongé par une languette élastique 201 formant une sorte de jupe et montrée sur la figure 30, la languette 201 étant apte, lorsque le panneau externe 40 est en position fermée, à venir en recouvrement de l'extrémité du panneau interne 41 au niveau de l'extrémité de la lèvre d'entrée d'air 4a.

Cette amélioration est représentée sur les figures 30 et 31.

La languette élastique 201 est montée sur la partie mobile 40 en extrémité de la lèvre d'entrée d'air. Elle ne peut généralement pas être intégrée à la partie fixe 41 en raison du sens du flux d'air, sinon il y aurait risque d'écopage.

La languette élastique 201, en venant recouvrir la jonction entre les deux panneaux 40 et 41, permet de maintenir une surface intérieure lisse tout en s'adaptant aux décalages et mouvements relatifs entre les panneaux 40 et 41.

La languette 201 pourra être un joint souple du type, silicone renforcé ou non, ou encore un joint en marguerite, par exemple métallique avec contact téflon. On pourra également envisager un joint souple et marguerite.

La languette 201 pourra être réalisée comme représenté sur les figures 30 et 31 avec une épaisseur d'extrémité plus importante que le reste de la languette 201, ceci afin de pouvoir être mise en précontrainte lors de son montage sur la paroi externe 40 de manière à assurer un contact permanent quels que soient les écarts dus aux tolérance de fabrication et aux effets de succion aérodynamique.

Corollairement, ceci implique que la forme de l'extrémité du panneau interne 41 destiné à être recouvert par la languette 201 soit compatible avec la précontrainte de la languette 201. En l'espèce, l'extrémité du panneau interne 41 présente un léger évidement correspondant à l'épaisseur de l'extrémité de la languette 201.

Il convient de noter que préférentiellement, les pions de centrage 21 sont conçus de manière à présenter une longueur suffisante pour être mis en contact, engagé, avant la mise en contact avec la languette 201.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

Notamment, il conviendra de noter que les améliorations présentées, à savoir, les modes d'entraînement et de guidage, la languette élastique, ne sont pas limitées à une nacelle présentant un capot mobile particulier mais peut être appliqué aisément entre autres, d'une part, à une nacelle présentant un capot mobile intégrant également la paroi externe de la section médiane, et d'autre part, à d'autres parties mobiles de la nacelle soumises aux même problématiques.

## Revendications

1. Nacelle (1) pour turboréacteur comprenant une structure d'entrée d'air (4) apte à canaliser un flux d'air vers une soufflante du turboréacteur et une structure médiane (5) destinée à entourer ladite soufflante et à laquelle est rattachée la structure d'entrée d'air de manière à assurer une continuité aérodynamique, la structure médiane comprenant, d'une part, un carter (9) destiné à entourer la soufflante et, d'autre part, une structure externe (13) comprenant au moins un capot mobile (13) apte à permettre un accès extérieur à la nacelle, **caractérisée en ce que** la structure d'entrée d'air comprend, d'une part, au moins un panneau interne (41) fixé à la structure médiane par l'intermédiaire du carter et formant avec cette dernière une structure fixe de la nacelle, et d'autre part, au moins un panneau externe (40) longitudinal rattaché de manière amovible à la structure fixe et intégrant une lèvre (4a) d'entrée d'air, ledit panneau externe étant amovible entre une position de fonctionnement dans laquelle le panneau externe assure la continuité aérodynamique avec la structure externe de la section médiane et la lèvre d'entrée d'air assure la continuité aérodynamique avec le panneau interne de la structure d'entrée d'air, et une position de maintenance dans laquelle le panneau externe est écarté de la structure externe de la section médiane et la lèvre d'entrée d'air est écartée du panneau interne de la structure d'entrée d'air.

2. Nacelle (1) selon la revendication 1, **caractérisée en ce que** la structure médiane (5) présente avec le panneau externe (40) une interface située en aval de la structure d'entrée d'air (4).

3. Nacelle selon l'une quelconque des revendications 1 ou 2, **caractérisée en ce que** la lèvre (4a) et le panneau interne (41) de la structure d'entrée d'air (4) présentent une interface au niveau de laquelle ladite lèvre et panneau externe se chevauchent partiellement lorsqu'en position de fermeture.

4. Nacelle selon la revendication 3, **caractérisée en ce que** l'interface présente un point amont formant butée.

5. Nacelle selon l'une quelconque des revendications 3 ou 4, **caractérisée en ce que** la partie de la paroi interne (41) chevauchant la lèvre (4a) intègre des moyens de dégivrage de la zone inférieure de ladite lèvre.

6. Nacelle (1) selon l'une quelconque des revendications 1 à 5, **caractérisé en ce que** le panneau externe (40) de la structure d'entrée d'air (4) présente un cadre avant (17) apte à être rattaché à une cloison (14) complémentaire de la structure d'entrée d'air solidaire d'une partie fixe de la nacelle par l'intermédiaire du panneau interne (41).

7. Nacelle (1) selon l'une quelconque des revendications 1 à 6, **caractérisé en ce que** la structure d'entrée d'air (4) comprend des moyens de centrage (15, 16) et de positionnement du panneau externe (40).

8. Nacelle (1) selon l'une quelconque des revendications 1 à 7, **caractérisée en ce que** la structure d'entrée d'air (4) comprend des moyens de guidage (15, 16, 30, 31, 35, 36, 45, 46, 47, 48, 49, 50, 51, 55, 56) aptes à permettre un déplacement sensiblement rectiligne du panneau externe (40) vers l'amont de la nacelle de manière à pourvoir ouvrir le panneau externe.

9. Nacelle (1) selon la revendication 8, **caractérisée en ce que** la structure d'entrée d'air (4) comprend au moins un moyen de butée (20, 54) du panneau externe (40) apte à permettre une ouverture partielle de ce dernier sans nécessiter une dépose complète.

10. Nacelle (1) selon l'une quelconque des revendications 8 ou 9, **caractérisée en ce que** les moyens de guidage (30, 31, 35, 36, 45, 46, 47, 48, 49, 50, 51, 55, 56) comprennent au moins un système de rail (30, 35, 45, 48, 49, 51).

11. Nacelle (1) selon la revendication 10, **caractérisée en ce que** les moyens de guidage comprennent au moins un rail (30, 35, 51) apte à coopérer avec un coulisseau ou une glissière (31, 36, 50) correspondant.

12. Nacelle (1) selon l'une quelconque des revendications 10 ou 11, **caractérisée en ce que** les moyens de guidage comprennent au moins un système de patins (50) à rouleaux (52) aptes à coopérer avec un rail correspondant (51).

13. Nacelle (1) selon la revendication 12, **caractérisée en ce que** les rouleaux sont montés sur des axes souples.

14. Nacelle (1) selon l'une quelconque des revendications 12 ou 13, **caractérisé en ce que** les rouleaux sont montés sur au moins une platine (161, 162), ladite platine étant elle-même fixée de manière souple, par une liaison rotulante (165) ou une interface souple (166), par exemple.

15. Nacelle (1) selon l'une quelconque des revendications 10 à 14, **caractérisée en ce que** les moyens de guidage comprennent au moins un rail en rigole (47) apte à coopérer avec un système de glissière (47, 48) correspondant.

16. Nacelle (1) selon l'une quelconque des revendications 7 à 15, **caractérisée en ce que** les moyens de guidage comprennent au moins un axe (15, 16, 55) longitudinal apte à coulisser à travers une ouverture (19, 56) correspondante.

17. Nacelle (1) selon l'une quelconque des revendications 7 à 16, **caractérisée en ce que** la structure d'entrée d'air (4) comprend des moyens d'entraînement (37, 38) mécanique ou manuel du panneau externe (40) le long des moyens de guidage.

18. Nacelle (1) selon l'une quelconque des revendications 1 à 17, **caractérisée en ce que** le panneau externe (40) ou le panneau interne (41) est, au niveau de la jonction entre la lèvre d'entrée d'air (4a), prolongé par une languette élastique périphérique (201) apte à venir recouvrir ladite jonction lorsque le panneau externe est en position de fermeture.

## Patentansprüche

1. Gondel (1) für Turboreaktor, die eine Lufteinlassstruktur (4) umfasst, die geeignet ist, um einen Luftstrom zu einem Gebläse des Turboreaktors zu kanalisieren, und eine Mittenstruktur (5), die dazu bestimmt ist, das Gebläse zu umgeben und an die Lufteinlassstruktur derart angeschlossen ist, dass eine aerodynamische Kontinuität sichergestellt ist, wobei die Mittenstruktur einerseits ein Gehäuse (9) umfasst, das dazu bestimmt ist, das Gebläse zu umgeben, und andererseits eine äußere Struktur (13), die mindestens eine bewegliche Haube (13) umfasst, die geeignet ist, um einen äußeren Zugang zu der Gondel zu erlauben, **dadurch gekennzeichnet, dass** die Lufteinlassstruktur einerseits mindestens eine innere Platte (41) umfasst, die an der Mittenstruktur anhand des Gehäuses befestigt ist und mit dieser Letzteren eine stationäre Struktur der Gondel bildet, und andererseits mindestens eine äußere Längsplatte (40) die abnehmbar an der stationären Struktur angeschlossen ist und eine Lufteinlasslippe (4a) umfasst, wobei die äußere Platte zwischen einer Betriebsposition, in der die äußere Platte die aerodynamische Kontinuität mit der äußeren Struktur des Mittenabschnitts sicherstellt und die Lufteinlasslippe die aerodynamische Kontinuität mit der inneren Platte der Lufteinlassstruktur sicherstellt, und einer Wartungsposition, in der die äußere Platte von der äußeren Struktur des Mittenabschnitts beabstandet ist und die Lufteinlasslippe von der inneren Platte der Lufteinlassstruktur beabstandet ist, abnehmbar ist.

2. Gondel (1) nach Anspruch 1, **dadurch gekennzeichnet, dass** die Mittenstruktur (5) mit der äußeren Platte (40) eine Schnittstelle bildet, die stromabwärts der Lufteinlassstruktur (4) liegt.

3. Gondel nach einem der Ansprüche 1 oder 2, **dadurch gekennzeichnet, dass** die Lippe (4a) und die innere Platte (41) der Lufteinlassstruktur (4) eine Schnittstelle aufweisen, in deren Bereich sich die Lippe und die äußere Platte in Schließposition teilweise überlagern.

4. Gondel nach Anspruch 3, **dadurch gekennzeichnet, dass** die Schnittstelle einen stromaufwärtigen Punkt aufweist, der einen Anschlag bildet.

5. Gondel nach einem der Ansprüche 3 oder 4, **dadurch gekennzeichnet, dass** der Teil der inneren Wand (41), der der Lippe (4a) überlagert ist, Enteisungsmittel der unteren Zone der Lippe integriert.

6. Gondel (1) nach einem der Ansprüche 1 bis 5, **dadurch gekennzeichnet, dass** die äußere Platte (40) der Lufteinlassstruktur (4) einen vorderen Rahmen (17) aufweist, der geeignet ist, um an eine Wand (14) angeschlossen zu werden, die zu der Lufteinlassstruktur, die fest zu einem stationären Teil der Gondel über die innere Platte (41) verbunden ist, komplementär ist.

7. Gondel (1) nach einem der Ansprüche 1 bis 6, **dadurch gekennzeichnet, dass** die Lufteinlassstruktur (4) Mittel zum Zentrieren und Positionieren (15, 16) der äußeren Platte (40) umfasst.

8. Gondel (1) nach einem der Ansprüche 1 bis 7, **dadurch gekennzeichnet, dass** die Lufteinlassstruktur (4) Führungsmittel (15, 16, 30, 31, 35, 36, 45, 46, 47, 48, 49, 50, 51, 55, 56) umfasst, die geeignet sind, um eine im Wesentlichen geradlinige Bewegung der äußeren Platte (40) nach stromaufwärts der Gondel derart zu erlauben, dass die externe Platte geöffnet werden kann.

9. Gondel (1) nach Anspruch 8, **dadurch gekennzeichnet, dass** die Lufteinlassstruktur (4) mindestens ein Anschlagmittel (20, 54) der äußeren Platte (40) umfasst, das geeignet ist, um ein teilweises Öffnen dieser Letzteren zu erlauben, ohne ein komplettes Ausbauen zu erfordern.

10. Gondel (1) nach einem der Ansprüche 8 oder 9, **dadurch gekennzeichnet, dass** die Führungsmittel (30, 31, 35, 36, 45, 46, 47, 48, 49, 50, 51, 55, 56) mindestens ein Schienensystem (30, 35, 45, 48, 49, 51) umfassen.

11. Gondel (1) nach Anspruch 10, **dadurch gekennzeichnet, dass** die Führungsmittel mindestens eine Schiene (30, 35, 51) umfassen, die geeignet ist, mit einer entsprechenden Gleitführung oder einer Gleitschiene (31, 36, 50) zusammenzuwirken.

12. Gondel (1) nach einem der Ansprüche 10 oder 11, **dadurch gekennzeichnet, dass** die Führungsmittel mindestens ein Kufensystem (50) mit Rollen (52) umfassen, die geeignet sind, um mit einer entsprechenden Schiene (51) zusammenzuwirken.

13. Gondel (1) nach Anspruch 12, **dadurch gekennzeichnet, dass** die Rollen auf elastischen Achsen montiert sind.

14. Gondel (1) nach einem der Ansprüche 12 oder 13, **dadurch gekennzeichnet, dass** die Rollen auf mindestens einer Platte (161, 162) montiert sind, wobei die Platte selbst elastisch zum Beispiel durch eine kugelgelenkige Verbindung (165) oder eine elastische Schnittstelle (166) befestigt ist.

15. Gondel (1) nach einem der Ansprüche 10 bis 14, **dadurch gekennzeichnet, dass** die Führungsmittel mindestens eine Rinnenschiene (47) umfassen, die geeignet ist, um mit einem entsprechenden Gleitschienensystem (47, 48) zusammenzuwirken.

16. Gondel (1) nach einem der Ansprüche 7 bis 15, **dadurch gekennzeichnet, dass** die Führungsmittel mindestens eine Längsachse (15, 16, 55) umfassen, die geeignet ist, durch eine entsprechende Öffnung (19, 56) zu gleiten.

17. Gondel (1) nach einem der Ansprüche 7 bis 16, **dadurch gekennzeichnet, dass** die Lufteinlassstruktur (4) mechanische oder manuelle Antriebsmittel (37, 38) der äußeren Platte (40) entlang der Führungsmittel umfasst.

18. Gondel (1) nach einem der Ansprüche 1 bis 17, **dadurch gekennzeichnet, dass** die äußere Platte (40) oder die innere Platte (41) im Bereich der Verbindung zwischen der Lufteinlasslippe (4a) durch eine umfängliche elastische Lasche (201), die geeignet ist, die Verbindung abzudecken, wenn die äußere Platte in Schließposition ist, verlängert ist.

## Claims

1. A nacelle (1) for a turbojet engine comprising an air inlet structure (4) capable of channeling an air flow toward a fan of the turbojet engine and a middle structure (5) intended to surround said fan and to which the air inlet structure is fastened so as to ensure an aerodynamic continuity, the middle structure comprising, on the one hand, a casing (9) intended to surround the fan and, on the other hand, an outer structure (13) comprising at least one movable cowl (13) capable of enabling access to the nacelle from the outside, **characterized in that** the air inlet structure comprises, on the one hand, at least one inner panel (41) secured to the middle structure via the casing and forming with the latter a fixed structure of the nacelle and, on the other hand, at least one longitudinal outer panel (40) removably fastened to the fixed structure and embedding an air inlet lip (4a), said outer panel being removable between an operating position in which the outer panel ensures aerodynamic continuity with the outer structure of the mid-section and the air inlet lip ensures aerodynamic continuity with the inner panel of the air inlet structure, and a maintenance position in which the outer panel is moved away from the outer structure of the mid-section and the air inlet lip is moved away from the inner panel of the air inlet structure.

2. The nacelle (1) according to claim 1, **characterized in that** the middle structure (5) presents, together with the outer panel (40), an interface located downstream of the air inlet structure (4).

3. The nacelle according to any one of claims 1 or 2, **characterized in that** the lip (4a) and the inner panel (41) of the air inlet structure (4) have an interface at which said lip and outer panel partially overlap each other when in the closed position.

4. The nacelle according to claim 3, **characterized in that** the interface has an upstream point forming a stop.

5. The nacelle according to any one of claims 3 or 4, **characterized in that** the portion of the inner wall (41) overlapping the lip (4a) embeds means for de-icing the lower area of said lip.

6. The nacelle (1) according to any one of claims 1 to 5, **characterized in that** the outer panel (40) of the air inlet structure (4) has a front frame (17) capable of being fastened to a complementary partition wall (14) of the air inlet structure secured to a fixed portion of the nacelle via the inner panel (41).

7. The nacelle (1) according to any one of claims 1 to 6, **characterized in that** the air inlet structure (4) comprises means (15, 16) for centering and positioning the outer panel (40).

8. The nacelle (1) according to any one of claims 1 to 7, **characterized in that** the air inlet structure (4) comprises guide means (15, 16, 30, 31, 35, 36, 45, 46, 47, 48, 49, 50, 51, 55, 56) capable of enabling a substantially rectilinear displacement of the outer panel (40) upstream of the nacelle so as to allow opening of the outer panel.

9. The nacelle (1) according to claim 8, **characterized in that** the air inlet structure (4) comprises at least one stop means (20, 54) of the outer panel (40) capable of enabling a partial opening of the latter without the need for a complete removal.

10. The nacelle (1) according to any one of claims 8 or 9, **characterized in that** the guide means (30, 31, 35, 36, 45, 46, 47, 48, 49, 50, 51, 55, 56) comprise at least one rail system (30, 35, 45, 48, 49, 51).

11. The nacelle (1) according to claim 10, **characterized in that** the guide means comprise at least one rail (30, 35, 51) capable of cooperating with a corresponding slider or slide way (31, 36, 50).

12. The nacelle (1) according to any one of claims 10 or 11, **characterized in that** the guide means comprise at least one system of roller (52) pads (50) capable of cooperating with a corresponding rail (51).

13. The nacelle (1) according to claim 12, **characterized in that** the rollers are mounted on flexible axles.

14. The nacelle (1) according to any one of claims 12 or 13, **characterized in that** the rollers are mounted on at least one plate (161, 162), said plate being, in turn, secured in a flexible manner, for example by means of a swivel connection (165) or a flexible interface (166).

15. The nacelle (1) according to any one of claims 10 to 14, **characterized in that** the guide means comprise at least one runner rail (47) capable of cooperating with a corresponding slide way system (47, 48).

16. The nacelle (1) according to any one of claims 7 to 15, **characterized in that** the guide means comprise at least one longitudinal axis (15, 16, 55) capable of sliding through a corresponding opening (19, 56).

17. The nacelle (1) according to any one of claims 7 to 16, **characterized in that** the air inlet structure (4) comprises means (37, 38) for mechanically or manually driving the outer panel (40) along the guide means.

18. The nacelle (1) according to any one of claims 1 to 17, **characterized in that** the outer panel (40) or the inner panel (41) is prolonged, at the junction between the air inlet lip (4a), by a peripheral elastic tab (201) capable of covering said junction when the outer panel is in the closed position.
